# EUROPEAN PATENT SPECIFICATION

(11) **EP 1 009 696 B1**
(45) Date of publication and mention of the grant of the patent: **14.11.2001**
(21) Application number: 98940228.4
(22) Date of filing: 15.07.1998
(51) Int. Cl.: B65G 47/91

(54) **PNEUMATIC DEVICE FOR THE TRANSPORTING OF MECHANICAL PIECES, AND APPARATUS COMPRISING SUCH DEVICE**
PNEUMATISCHE TRANSPORTVORRICHTUNG FÜR MECHANISCHE WERKSTÜCKE UND GERÄT MIT EINER SOLCHEN VORRICHTUNG
DISPOSITIF PNEUMATIQUE POUR LE TRANSPORT DES PIECES MECANIQUES, ET APPAREIL COMPRENANT CE DISPOSITIF

(30) Priority: 03.09.1997 IT BO970524
(43) Date of publication of application: 21.06.2000
(73) Proprietor: MARPOSS SOCIETA' PER AZIONI, 40010 Bentivoglio BO (IT)
(72) Inventor: BOLOGNESI, Antonio, I-40135 Bologna (IT); GHIELMI, Antonio, I-40057 Granarolo Emilia (IT)
(74) Representative: Tamburini, Lucio
(86) International application number: EP9804389
(87) International publication number: WO9911549

(56) References cited:
- EP-A- 0 273 057
- EP-A- 0 277 683
- FR-A- 2 652 334
- US-A- 4 657 470
- US-A- 4 969 676
- US-A- 5 385 441
- US-A- 5 456 510
- PATENT ABSTRACTS OF JAPAN vol. 016, no. 235 (M-1257), 29 May 1992 & JP 04 049121 A (HONDA MOTOR CO LTD), 18 February 1992

## Description

### Technical Field

The present invention relates to a pneumatic device for picking up and releasing substantially flat objects, according to the preamble of claim 1.

Furthermore, the invention relates to an apparatus for picking up and releasing shims in appropriate seats in the cylinder head of an internal combustion engine, comprising a support body and a plurality of pneumatic pick up devices coupled to the support body.

### Background Art

European patent application EP-A-0273057; which the preamble of claim 1 refers to, discloses a head having the above-mentioned features of a pneumatic device according to the invention. The head includes a body with a suction pad for engaging with the top of the objectto be transported and an air passage. In order to pick up an object, the air passage is connected to a pressure reducing source that generates the suction force. On the contrary, when the object has to be released, the air passage is connected to a source of compressed air that blows the object off the suction pad and/or pulls a weight against the object surface.

There are known other pneumatic devices for picking up and transporting objects substantially without there being any physical contact between the object and the device. Similar devices exploit the "Venturi tube" effect. As known, the "Venturi tube" is an instrument for measuring the velocity of a fluid in a conduit, that consists of a tube with two truncated cones joined together at the minor bases. A fluid, flowing through the instrument, increases its velocity in the portion with converging cross-section and decreases it in the portion with diverging cross-section and in consideration of the fact that the pressure is inversely proportional to the square of velocity (as stated in the Bernoulli principle), the velocity variation generates an opposite variation in pressure, that is higher at the input and at the output of the tube and is lower at the choke defined by the area of conjunction between the two truncated cones. The devices that exploit this principle and are mainly utilized for picking up and transporting flat, delicate and light weight objects, generally comprise an element with a substantially plane surface and a centrally located hole connected to a conduit for blowing compressed air. The device is moved towards the object to be picked up so that the plane surface faces a surface of the object, thereby creating, by means of the two surfaces, a choke like the one in the "Venturi tube". The air flows out of the hole and into the choke at a high velocity, thus, according to the Bernoulli principle, the increase of the air velocity between the surface of the device and that of the object induces a depression between the two surfaces with respect to the atmospheric air pressure on the opposite surface of the object. When the pressure differential between the two surfaces becomes sufficiently high to overcome the force of gravity, the object can be picked up by the device, and released by the latter when the air flow is cut off.

U.S. patent 4,969,676 describes a manually operated device of the above described type for transporting silicon wafers for integrated circuits, that comprises a disc with a flat surface and a central air passage, and centering elements coupled at the periphery of the disc.

Pneumatic devices of this type are also utilized in the automotive industry, more specifically in apparatuses operating in automatic assembly lines for picking up and transporting appropriately thick shims and inserting them in respective recesses at the valve side of bucket type tappets of internal combustion engines, thus attaining the required amount of clearance between the cams of the camshaft and the valves. Similar apparatuses comprise a certain number of devices, or "pneumatic heads", that pick up the shims in the formerly described manner at a selection station, transport and release them in the recesses of the associated bucket type tappets at the valve side. The heads are equipped with lateral limiting devices that have the purpose of centering the shims, hence permitting their correct insertion in the associated bucket type tappets. In some cases, more specifically if the head is not properly centered in the recess of the bucket type tappet, there may occur during the insertion and release phases that the lateral limiting devices apply transversal forces to the shim thereby causing, when the head retracts, the at least partial displacement of the shim out of the bucket type tappet recess.

The problems that may arise owing to improper positioning, or lack of shims are evident, in particular in automatic assembly lines. In fact, a defective assembly may not be detected, and thus cause malfunctions and damage to the engine, and even when it is detected, for example by an operator specifically dedicated to perform this task, the manual intervention may be considerably expensive in terms of involved time and costs.

### Disclosure of Invention

Object of the present invention is to provide a pneumatic pick up and release device that overcomes the limits of the known apparatuses, and in particular ensures a proper release of the objects that have been picked up.

This and other objects are achieved by a device according to claim 1 and an apparatus according to claim 5.

### Brief Description of the Drawings

The invention is now described in more detail with reference to the enclosed sheets of drawings, given by way of non limiting example, wherein:
figure 1 schematically shows an apparatus utilizing pneumatic devices according to the invention;
figure 2 is a longitudinal cross-sectional view of the end portion of. a pneumatic device according to the invention, shown in a first operating condition and in an enlarged scale with respect to that of figure 1;
figure 3 is a longitudinal cross-sectional view of the pneumatic device shown in figure 2, according to a second operating condition; and
figure 4 is a transversal cross-sectional view of the device shown in figures 2 and 3, taken along line IV-IV in figure 3.

### Best Mode for Carrying Out the Invention

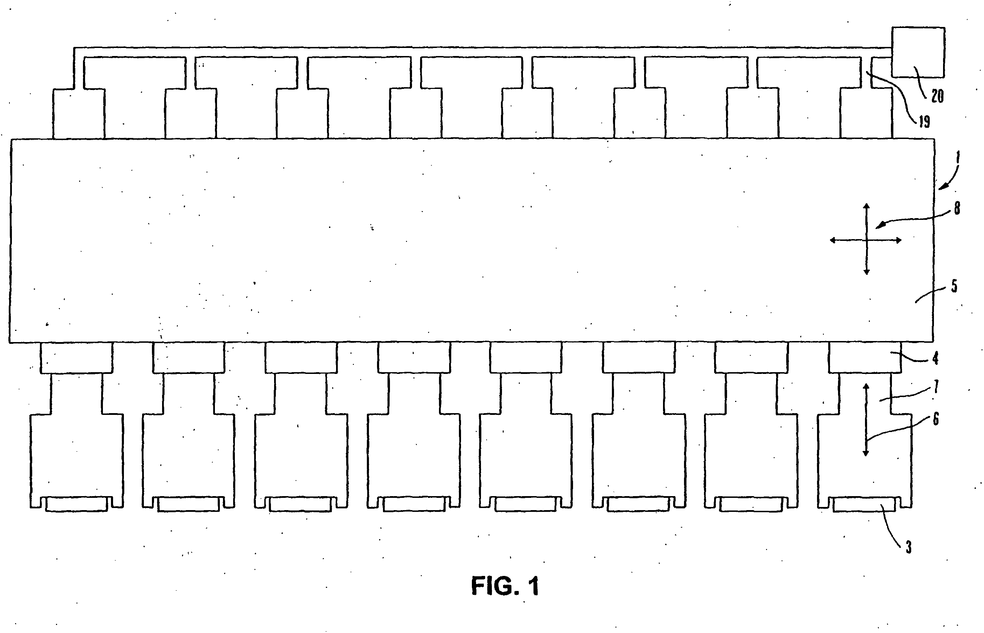

Figure 1 schematically shows an apparatus **1** for inserting a series of shims **3** in appropriate seats at the valve side of associated bucket type tappets of a cylinder head of an internal combustion engine, not shown in the figures. These shims 3, as already known, are specifically selected in order to define the proper amount of clearance between each cam of the camshaft and its associated valve.

The apparatus **1** comprises a support body **5** and a set of pneumatic pick up devices, or pneumatic heads, **7** coupled thereto for picking up, transporting and inserting shims **3** in the seats of the associated bucket type tappets.

Each head **7** defines a longitudinal geometric axis and is coupled with body **5** by means of a resilient type coupling, featured in a known way that is schematically shown and identified by reference number **4** in figure 1, that allows limited reciprocal longitudinal displacements, in. the range of a few millimeters, according to the direction indicated by arrows **6.**

Moreover, body **5** may have guides and slides, also per se known and not illustrated in the drawings, that enable the set of heads **7** to perform the displacements required for transporting the shims **3** from the pick up area to the seats where they are released, for example according to the directions indicated by arrows **8.**

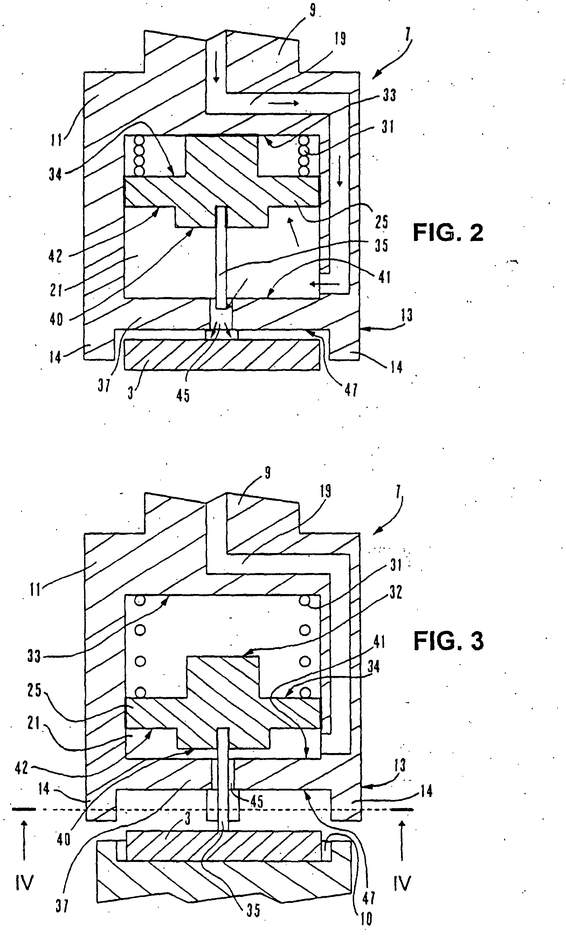

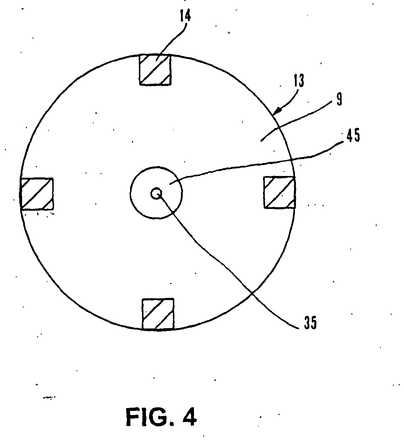

As the pneumatic heads **7** are identical, only one will be detailedly described with reference to figures 2, 3 and 4.

Each pneumatic head **7** has a casing **9,** of a substantially cylindrical shape, with a larger terminal portion **11** that comprises a closure plate **37** for defining a transversal, substantially plane, end surface **47.**

The terminal portion **11,** i.e. specifically the end surface **47** has a rim **13** and a certain number of longitudinal centering overhangs; or teeth, **14** arranged along rim **13** (as an example only, the device shown in the figures has four teeth).

The terminal portion **11** comprises a cylindrical recess **21** and a pneumatic circuit including a conduit **19,** housed in casing **9** and communicating with recess **21**, and a source of compressed air, identified by reference number **20** in figure 1, connected to conduit **19.** The closure plate **37** has a cylindrical through hole **45** communicating with the cylindrical recess **21** and substantially aligned along the longitudinal axis of head **7**. A thrust mechanism includes a piston **25** that can longitudinally slide within the interior of cylindrical recess **21** and has cylindrical portions with different diameter that define transversal plane limit stop surfaces **32** and **40** for contacting internal plane surfaces **33** and **41** of recess **21** for limiting-the stroke of piston **25** in either direction, and transversal, oppositely arranged, thrust surface **34** and retraction surface **42.**

A pin **35** is coupled to, for example screwed into, piston **25** and arranged substantially along the longitudinal axis of head **7.** The diameter of pin **35** is smaller than that of the cylindrical hole **45** for the purpose of allowing the flow of compressed air through the formerly mentioned hole even when pin **35** is partially housed therein.

Furthermore, the thrust mechanism comprises a compression spring **31**, arranged between the internal plane surface **33** of the cylindrical recess **21** and the transversal thrust surface **34**, that urges pin **35** towards the exterior of casing **9**, by protruding from hole **45**.

The compressed air, injected into the cylindrical recess **21** through conduit 19, acts upon the transversal retraction surface **42** for urging piston **25,** and thus pin **35,** towards the interior, in a retracted position (as shown in figure 2). The same compressed air flows out of recess **21** by passing through hole **45.**

The apparatus operates in the following way.

Body **5** of apparatus **1** is displaced towards a pick up area, not shown in the figures, where the shims **3** to be inserted in the seats of the bucket type tappets have been suitably arranged. The shims **3** have different thickness and are selected on the basis of previous checkings and measurement takings performed, for example, on the cylinder head and the camshaft, for determining the amount of clearance that it is desired to achieve between the cams and their associated valves. The end surfaces **47** of the pneumatic heads **7** are moved towards the shims **3** until contact is made. Then, ejection of compressed air from source **20** is started. In each head **7** the compressed air flows -by passing through conduit **19-** into recess **21** and urges piston **25** towards the interior in the retracted position, opposing the thrust applied by compression spring **31** (figure 2). Moreover, air flows through hole 45 of closure plate **37,** comes out of the same hole **45** and moves in a path limited by end surface **47** and shim **3,** thereby lifting head **7** with respect to shim **3** of an amount in the range of a tenth of a millimeter, thanks to the resilient type coupling **4** between head **7** and body **5**, and flows, at a high velocity owing to the "Venturi tube" effect, substantially along radial directions, within the small amount of space existing between surface **47** and the surface of the shim **3** to be picked up. Within this space, there is formed a depression (Bernoulli pinciple) and shim **3** is urged -by the greater amount of atmospheric air pressure on the opposite surfacetowards surface **47** of head **7,** thereby enabling head **7** to pick up and transport shim **3.**

In the course of the pick up and the transporting operations, teeth **14** contribute to center shims **3** with respect to the associated end surfaces **47.**

Once the set of heads **7** has picked up shims **3,** it is displaced towards the cylinder head of the engine (not shown in the figures), and positioned, for example by means of mechanical references, in such a way so that heads **7** and shims **3** are at the seats of the bucket type tappets, schematically shown and identified by reference number **10** in figure **3**.

The air flow ejected from source **20** is stopped, the pressure applied to the two faces of shims **3** is re-balanced and, by effect of the force of gravity, shims **3** are released in seats **10.** The moment when the air flow is stopped, the thrust applied to the transversal surface **42** of pistons **25** stops too, and the latter, urged by their associated springs **31,** switch from retracted positions (figure 2) to advanced thrust positions (figure 3) in which their associated pins **35** protrude from holes 45 and take part in the insertion of shims **3** in seats **10.**

Moreover, when the heads **7** retract, pins **35** are urged by springs **31** to continue to exert their action on shims **3** for a short stroke, that is sufficient for keeping the shims **3** properly positioned in seats **10** and opposing the effect of possible undesired transversal forces among some of the teeth **14** and the associated shims **3,** that could tend to displace the shims **3** out of seats **10,** upon the retraction of the associated heads **7.**

The release of the thrust applied by each pin **35** and the complete detachment of each head **7** from its associated shim **3** are events that occur -in the course of the retraction of the set of heads **7-** subsequently to the contact of the transversal limit stop surface **40** of piston **25** against the internal surface **41** of the cylindrical recess **21** (at a time following the one referred to in figure 3).

Hence, the device according to the invention guarantees a proper and stable insertion of the shims **3** in their associated seats **10** of the bucket type tappets.

An embodiment like the one herein described and illustrated is particularly advantageous in that it enables to simultaneously perform with just a single pneumatic .circuit and a single control- both the pick up (and the release) of shims 3 by exploiting the Bernoulli principle and the retraction (and the release) of the thrust mechanism. More specifically, as described in the foregoing description, the same compressed air flow ejected from source **20** and that passes through conduit **19** induces both the depression -that enables to pick up the shims- and the release of piston **25.** The stopping of the formerly mentioned air flow causes the release of the shims and simultaneously the actuation of the thrust mechanisms.

It will be apparent that a device according to the present invention may undergo variants with respect to what has been herein described and illustrated, for instance in so far as the shape, the proportions and the arrangement of the thrust mechanism, the recess for its housing and the pneumatic conduit are concerned. Spring **31** can be replaced, for example, with a different device or may even be left out, where the weight of piston **25** is sufficient to provoke, when the flow of compressed air stops, its displacement towards the advanced thrust position.

Moreover, one or more pneumatic devices according to the invention can be utilized in apparatuses that have an entirely different structure with respect to the one that has been illustrated in an extremely schematic way in figure 1 for picking up and releasing substantially flat pieces that may have an entirely different shape and function with respect to those of the herein described and illustrated shims.

## Claims

1. Pneumatic device for picking up and releasing substantially flat objects, the device defining a longitudinal geometric axis and comprising
a substantially cylindrical shaped casing (**9**), that includes a terminal portion (**11**) with a transversal plane end surface (**47**), a longitudinal through hole (**45**) traversing said surface (**47**), and a recess (**21**) communicating with said through hole (**45**),
a pneumatic circuit comprising a source of compressed air (**20**) and a conduit (**19**), at least partially housed in the casing (**9**) and communicating with the recess (**21**), for the flow of compressed air from the source (**20**) to said through hole (**45**), and
a thrust mechanism including a piston (**25**), housed in said recess (**21**) of the casing (**9**), movable therein between a retracted and a thrust position along a longitudinal direction, and
a pin (**35**), coupled to the piston (**25**) and arranged along a longitudinal direction, the pin (**35**) being adapted for protruding from the casing (**9**) through the through hole (**45**) in said thrust position of the piston, **characterized in that** the piston (**25**) comprises at least a transversal retraction surface (**42**) for cooperating with the compressed air that flows from the source through conduit (**19**) for keeping the piston (**25**) in said retracted position.

2. A device according to claim 1, wherein the thrust mechanism comprises a compression spring (**31**), arranged between surfaces (**33,34**) of casing (**9**) and piston **(25),** for urging said piston (**25**) towards said thrust position.

3. A device according to claim 2, wherein said recess (**21**) has a substantially cylindrical shape and defines internal plane surfaces (**33,41**), the piston (**25**) comprising transversal plane limit stop surfaces (**32,40**) for cooperating with the internal plane surfaces of recess (**21**) for limiting the displacements of piston (**25**) and defining said retracted and thrust positions.

4. A device according to claim 3, wherein said terminal portion (**11**) of casing (**9**) comprises a rim (**13**) and a plurality of longitudinal centering overhangs (**14**).

5. Apparatus for picking up and releasing shims (**3**) in appropriate seats in the cylinder head of an internal combustion engine, comprising a support body (**5**) and a plurality of pneumatic pick up devices (**7**), according to one of claims from 1 to 4, coupled to said support body by means of a resilient coupling (**4**).

## Patentansprüche

1. Pneumatische Vorrichtung zum Aufnehmen und Freigeben von im wesentlichen flachen Gegenständen mit einer geometrischen Längsachse und
einem im wesentlichen zylindrisch geformten Gehäuse (9), das einen Endabschnitt (11) mit einer sich in Querrichtung erstreckenden, ebenen Endfläche (47), ein sich in Längsrichtung erstreckendes Durchgangsloch (45), das sich quer zur Fläche (47) erstreckt, und eine mit dem Durchgangsloch (45) in Verbindung stehende Ausnehmung (21) aufweist,
einem Pneumatikkreis, der eine Druckluftquelle (20) und eine Leitung (19) umfaßt, die zumindest teilweise im Gehäuse (9) untergebracht ist und mit der Ausnehmung (21) in Verbindung steht, um Druckluft von der Druckluftquelle (20) zum Durchgangsloch (45) strömen zu lassen, und
einem Axialdruckmechanismus einschließlich eines Kolbens (25), der in der Ausnehmung (21) des Gehäuses (9) angeordnet und darin zwischen einer zurückgezogenen und einer Druckstellung in Längsrichtung bewegbar ist, sowie
einem Stift (35), der mit dem Kolben (25) verbunden ist, in Längsrichtung angeordnet ist und in der Druckposition des Kolbens aus dem Gehäuse (9) durch das Durchgangsloch (45) vorstehen kann, **dadurch gekennzeichnet, daß** der Kolben (25) mindestens eine sich in Querrichtung erstreckende zurückgezogene Fläche (42) zur Zusammenwirkung mit der Druckluft, die von der Druckluftquelle durch die Leitung (19) strömt, um den Kolben (25) in der zurückgezogenen Position zu halten, aufweist.

2. Vorrichtung nach Anspruch 1, bei der der Axialdruckmechanismus eine Druckfeder (31) aufweist, die zwischen Flächen (33, 34) des Gehäuses (9) und dem Kolben (25) angeordnet sind, um den Kolben (25) in die Druckposition zu drücken.

3. Vorrichtung nach Anspruch 2, bei der die Ausnehmung (21) eine im wesentlichen zylindrische Form besitzt und innere ebene Flächen (33, 41) aufweist und der Kolben (25) in Querrichtung verlaufende, ebene Begrenzungsflächen (32, 40) zur Zusammenwirkung mit den ebenen Innenflächen der Ausnehmung (21) besitzt, um die Verschiebungen des Kolbens (25) zu begrenzen und die zurückgezogene Position und Druckposition festzulegen.

4. Vorrichtung nach Anspruch 3, bei der der Endabschnitt (11) des Gehäuses (9) einen Rand (13) sowie eine Vielzahl von sich in Längsrichtung erstreckenden, zentrierenden Überhängen (14) aufweist.

5. Vorrichtung zum Aufnehmen und Freigeben von Beilagen (3) in geeignete Sitze im Zylinderkopf einer Brennkraftmaschine, wobei die Vorrichtung ein Lagergehäuse (5) und eine Vielzahl von pneumatischen Aufnehmevorrichtungen (7) gemäß einem der Ansprüche 1 bis 4 aufweist, welche mit Hilfe einer elastischen Kupplung (4) mit dem.Lagergehäuse verbunden sind.

## Revendications

1. Dispositif pneumatique pour saisir et libérer des objets sensiblement plats, le dispositif définissant un axe géométrique longitudinal et comprenant
- un boîtier (9) de forme sensiblement cylindrique, qui présente une partie terminale (11) avec une surface d'extrémité (47) plane et transversale, un trou traversant longitudinal (45) pratiqué au travers desdites surfaces (47), et un évidement (21) en communication avec ledit trou traversant (45),
- un circuit pneumatique comprenant une source d'air comprimé (20) et un conduit (19), au moins partiellement contenu dans le boîtier (9) et communiquant avec l'évidement (21), pour l'écoulement de l'air comprimé depuis la source (20) vers ledit trou traversant (45), et
- un mécanisme de poussée comportant un piston (25), contenu dans ledit évidement (21) du boîtier (9), mobile à l'intérieur dudit évidement entre une position rétractée et une position de poussée le long d'une direction longitudinale, et
- une broche (35), couplée au piston (25) et disposée le long d'une direction longitudinale, la broche (35) étant adaptée pour faire saillie du boîtier (9) au travers du trou traversant (45) dans ladite position de poussée du piston,
**caractérisé en ce que** le piston (25) comprend au moins une surface de rétraction transversale (42) pour coopérer avec l'air comprimé qui s'écoule depuis la source au travers du conduit (19) pour maintenir le piston (25) dans ladite position rétractée.

2. Dispositif suivant la revendication 1, **caractérisé en ce que** le mécanisme de poussée comprend un ressort de compression (31), disposé entre les surfaces (33, 34) du boîtier (9) et le piston (25), pour solliciter ledit piston (25) vers ladite position de poussée.

3. Dispositif suivant la revendication 2, **caractérisé en ce que** ledit évidement (21) présente une forme sensiblement cylindrique et définit des surfaces planes internes (33, 41), le piston (25) comprenant des surfaces d'arrêt (32, 40) glanes et transversales prévus pour coopérer avec les surfaces planes internes de l'évidement (21) de façon à limiter les déplacements du piston (25) et définir lesdites positions rétractées et de poussée.

4. Dispositif suivant la revendication 3, **caractérisé en ce que** ladite portion terminale (11) du boîtier (9) comprend un rebord (13) et une pluralité de saillies (14) longitudinales de centrage.

5. Appareil pour saisir et libérer des éléments de calage (3) dans des logements appropriés dans une tête de cylindre d'un moteur à combustion interne, comprenant un corps de support (5) et une pluralité de dispositifs pneumatiques de saisie (7), conformes à l'une quelconque des revendications 1 à 4, couplés audit corps de support par des moyens de couplage élastique (4).
